# EUROPÄISCHE PATENTSCHRIFT

(11) **EP 1 530 833 B1**
(45) Veröffentlichungstag und Bekanntmachung des Hinweises auf die Patenterteilung: **20.06.2007**
(21) Anmeldenummer: 03790799.5
(22) Anmeldetag: 15.07.2003
(51) Int. Cl.: H04B 3/56

(54) **ANORDNUNG UND VERFAHREN ZUM ANSCHLUSS EINER POWERLINE-DATEN ÜBERTRAGUNGSEINRICHTUNG AN MEHRERE STROMVERSORGUNGSLEITUNGEN**
ASSEMBLY AND METHOD FOR CONNECTING A POWER LINE DATA TRANSMISSION DEVICE TO SEVERAL POWER SUPPLY LINES
SYSTEME ET PROCEDE POUR RACCORDER UN DISPOSITIF DE TRANSMISSION DE DONNEES SUR LIGNES ELECTRIQUES A PLUSIEURS LIGNES D'ALIMENTATION ELECTRIQUE

(30) Priorität: 20.08.2002 DE 10239016
(43) Veröffentlichungstag der Anmeldung: 18.05.2005
(73) Patentinhaber: Power Plus Communications AG, 68163 Mannheim (DE)
(72) Erfinder: FLICKER, Jürgen, 69259 Wilhelmsfeld (DE); HEILER, Wolfgang, 68799 Reilingen (DE)
(74) Vertreter: Kesselhut, Wolf
(86) Internationale Anmeldenummer: PCT/EP2003/007625
(87) Internationale Veröffentlichungsnummer: WO 2004/021600

(56) Entgegenhaltungen:
- EP-A- 1 079 538
- EP-A- 1 187 271
- WO-A-98/33258
- WO-A-03/034608

## Beschreibung

Die Erfindung betrifft eine Anordnung und ein Verfahren zum Anschluss einer Powerline-Datenübertragungseinrichtung an mehrere, durch eine Netztrennung voneinander getrennte Stromversorgungsleitungen in einem Netzknoten eines vermaschten Niederspannungs-Stromnetzes, gemäß dem Oberbegriff von Anspruch 1.

Auf dem Gebiet der Telekommunikation werden heutzutage für die Übertragung von elektronischen Daten zwischen Rechnern, beispielsweise im Bereich des Internets, neben speziell für diese Zwecke ausgebildeten herkömmlichen Datenleitungen in zunehmendem Maße die Leitungen des öffentlichen Stromnetzes verwendet.

Bei dieser in Fachkreisen als "Powerline" System oder "Powerline Communications" (PLC) bezeichneten Technologie werden Datensignale neben der üblichen 50 Hz Spannung auf Stromleitungen als Hochfrequenzsignale aufmoduliert. Hierbei liegen die Pegel der verwendeten Signalspannungen in der Regel im Bereich von weniger als einem Volt und weisen Frequenzen im Bereich von 1,5 bis 30 MHz auf.

Die Verbindung zwischen Geräten des Powerline-Systems, die in einem vermaschten Stromnetz angeschlossen sind, erfolgt dabei nach den Prinzipien eines Datennetzes mit einem Bus als Medium. Da die hochfrequenten Signale mit zunehmender Entfernung mehr und mehr gedämpft werden, ist der Einsatz von Zwischenverstärkern erforderlich, die in Fachkreisen auch als "Repeater" bezeichnet werden.

Die Powerline-Datenübertragungseinrichtungen, die in Fachkreisen auch als "CU's" (Central Units) bezeichnet werden, werden dabei an Verteilervorrichtungen des sogenannten Niederspannungs-Stromnetzes mit Spannungen von ca. 230 V, wie z.B. Trafostationen, Straßenverteilern oder Hausanschlusskästen, angebracht, und koppeln die hochfrequenten Signale in die jeweiligen, zu den einzelnen Hausanschlüssen führenden Stromversorgungsleitungen des Niederspannungs-Stromnetzes ein, die in der Regel über Starkstromsicherungen mit einer der stromführenden Sammelschienen der Trafostation, des Straßenverteilers oder Hausanschlusses verbunden sind.

In diesem Zusammenhang ergibt sich das Problem, dass eine Powerline-Datenübertragungseinrichtung aufgrund der elektrisch leitenden Verbindung über die Sammelschiene ihre Hochfrequenzsignale zwangsweise in alle mit der Sammelschiene verbundene Starkstromleitungen einkoppelt, sodass z.B. im Falle eines Straßenverteilers, bei dem drei oder mehrere Häuserreihen durch eine Sammelschiene versorgt werden, die maximal mögliche Datenübertragungsrate pro Häuserreihe lediglich ein Drittel der maximalen Übertragungsrate der Powerline-Datenübertragungseinrichtung beträgt. ,

Hierbei bilden die Powerline-Datenübertragungseinrichtungen in Hinblick auf die maximal übertragbare Datenmenge aufgrund der Signalwandlung den Flaschenhals bei der Übertragung der Daten, wohingegen die Datennetze, die die Daten von den Serverrechnern zu den Powerline-Datenübertragungseinrichtunngen übertragen, eine erheblich größere Bandbreite besitzen, und z.B. zur Versorgung von 10 oder mehr Powerline-Datenübertragungseinrichtungen in der Lage sind.

In der Praxis ist es weiterhin aus Gründen einer optimalen Anpassung der Ströme innerhalb der einzelnen Maschen eines vermaschten Niederspannungs-Stromnetzes bekannt, die Starkstromleitungen zur Versorgung der Hausanschlüsse oder Straßenzüge, die über zugehörige Starkstromsicherungen an die stromleitenden Sammelschienen innerhalb eines Verteilerkastens angeschlossen sind, durch Entfernen der Sicherung von der zugehörigen Sammelschiene zu trennen, und in entsprechender Weise über einen Verteilerkasten am anderen Ende der Sammelschiene mit Strom zu versorgen, der in der Regel einer anderen Masche des Stromnetzes zugeordnet ist. Dieser Vorgang wird in Fachkreisen auch als "Netztrennung" bezeichnet.

Aus der DE-A-10120 540 ist es ferner bekannt, eine Powerline-Datenübertragungseinrichtung mittels eines außen isolierten und innen leitenden Adapters an die spannungsführenden Sammelschienen für die drei Phasen eines Verteilerkastens anzuschließen. Der Adapter wird hierbei auf das Gewinde einer Anschlussschraube für die weiterführenden Leitungen an der entsprechenden Sammelschiene aufgeschraubt und der in entsprechender Weise isolierte Zwischenverstärker anschließend auf den Adapter aufgesteckt.

Durch die Erfindung soll die Aufgabe gelöst werden, eine kostengünstige und zuverlässige Möglichkeit zu schaffen, eine Powerline-Datenübertragungseinrichtung an zwei oder mehrere Stromversorgungsleitungen anzuschließen, die durch Netztrennung elektrisch voneinander getrennt sind.

Diese Aufgabe wird erfindungsgemäß durch die Merkmale von Anspruch 1 gelöst.

Weitere Merkmale der Erfindung sind in den Unteransprüchen enthalten.

Gemäß der Erfindung umfasst eine Anordnung zum Anschluss einer Powerlin-Datenübertragungseinrichtung an eine erste und zweite, durch Netztrennung in einem Netzknoten eines Niederspannungs-Stromnetzes von einer stromleitenden Phase getrennte Stromversorgungsleitung einen ersten Stecker, der eine erste gegabelte klingenartige Kontaktfläche aufweist, die auf einen zugeordneten ersten Kontaktbereich eines ersten erfindungsgemäßen Isolatorelements aufsteckbar ist, welches in eine der ersten Stromversorgungsleitung zugeordnete Sicherungshalterung eingesetzt ist. Der erste Kontaktbereich ist hierbei im eingesetzten Zustand des Isolatorelements elektrisch leitend mit der ersten Stromversorgungsleitung verbunden.

Die erfindungsgemäße Anordnung umfasst weiterhin einen zweiten Stecker, der eine zweite, vorzugsweise in gleicher Weise wie die erste Kontaktfläche ausgebildete Kontaktfläche aufweist, die auf einen zweiten Kontaktbereich eines zweiten Isolatorelements aufgesteckt werden kann, welches in eine zweite, der zweiten Stromversorgungsleitung zugeordnete Sicherungshalterung eingesteckt ist. Der zweite Kontaktbereich steht hierbei im eingesetzten Zustand des zweiten Isolatorelements elektrisch leitend mit der zweiten Stromversorgungsleitung in Verbindung.

Die erste Kontaktfläche des ersten Steckers und die zweite Kontaktfläche des zweiten Steckers sind in erfindungsgemäßer Weise über eine elektrische Verbindungsleitung, beispielsweise ein doppelt isoliertes Kupferkabel oder ein Koaxialkabel, sowie einen Koppelkondensator miteinander verbunden, wobei der Koppelkondensator vorzugsweise ein Y1-Typ oder Y2-Typ Kondensator ist, der eine solche Kapazität aufweist, dass die durch die Powerline-Datenübertragungseinrichtung erzeugten Hochfrequenzsignale durch den Koppelkondensator hindurchtreten können, die 50 Hz Wechselspannung des Niederspannungs-Stromnetzes jedoch elektrisch getrennt ist.

Durch die Erfindung ergibt sich der Vorteil, dass sich die erste und die zweite, durch Netztrennung von der zugehörigen stromleitenden Phase innerhalb eines Schaltkastens oder Straßenverteilers oder einer Trafostation getrennte Stromversorgungsleitung über die Powerline-Datenübertragungseinrichtung zusätzlich mit Daten versorgen lassen, die durch die Powerline-Datenübertragungseinrichtung in entsprechende Hochfrequenzsignale gewandelt werden, welche über die erfindungsgemäße Anordnung in die erste und zweite Stromversorgungsleitung eingekoppelt werden.

Zusätzlich hierzu kann die allgemein durch die Powerline-Datenübertragungseinrichtung nach oben hin begrenzte Datenübertragungsrate in vorteilhafter Weise insgesamt dadurch erhöht werden, dass eine weitere Powerline-Datenübertragungseinrichtung an die stromführende Phase angeschlossen wird, die die übrigen, nicht durch Netztrennung getrennten Stromversorgungsleitungen des Netzknotens versorgt.

Gemäß einer weiteren Ausführungsform der Erfindung zeichnet sich ein Verfahren zum Anschluss einer Powerline-Datenübertragungseinrichtung an eine erste und eine zweite Stromversorgungsleitung in einem Netzknoten eines Niederspannungs-Stromnetzes, wobei die erste und die zweite Stromversorgungsleitung im Wege der Netztrennung elektrisch von einer stromführenden Phase des Niederspannungs-Stromnetzes getrennt sind, und die stromführende Phase mit einer weiteren Powerline-Datenübertragungseinrichtung elektrisch leitend verbunden ist, dadurch aus, dass die erste Stromversorgungsleitung und die zweite Stromversorgungsleitung über einen Koppelkondensator sowie eine elektrische Verbindungsleitung miteinander verbunden sind, und die Powerline-Datenübertragungseinrichtung elektrisch leitend an die elektrische Verbindungsleitung angeschlossen ist. Hierdurch ergibt sich der Vorteil, dass zusätzliche Powerline-Datenübertragungseinrichtungen auf einfachste Weise z.B. durch das zuvor beschriebene sogenanntes "Piercing" direkt an die jeweiligen, durch Netztrennung getrennten Stromversorgungsleitungen angeschlossen werden können, um die Daten-Übertragungskapazitäten weiter zu erhöhen.

Die Erfindung wird nachfolgend in Bezug auf die Zeichnungen anhand bevorzugter Ausführungsformen beschrieben.

In Zeichnung zeigen:
- Fig. 1: Eine schematische Darstellung eines Schaltkastens eines Netzknotens, bei dem insgesamt drei Stromversorgungsleitungen durch Netztrennung von der stromführenden Phase getrennt, und über eine erfindungsgemäße Anordnung mit einer ersten Powerline-Datenübertragungseinrichtung gekoppelt sind, und die übrigen Stromversorgungsleitungen über eine zweite Powerline-Datenübertragungseinrichtung mit Daten versorgt werden,
- Fig. 2: eine schematisierte Detaildarstellung der drei durch Netzwerktrennung voneinander getrennten Stromversorgungsleitungen, und
- Fig.3: eine schematische Darstellung des auf ein Isolatorelement aufgesteckten Steckers zur Verdeutlichung des gegabelten klingenförmigen Kontaktbereichs.

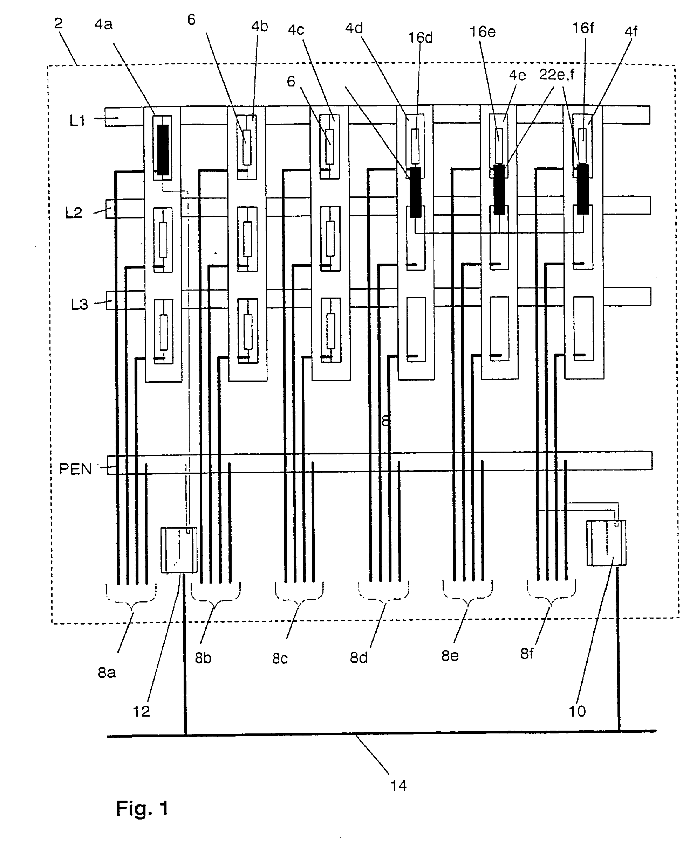

Wie in Fig. 1 gezeigt ist, umfasst ein Schaltkasten 2 eines vermaschten Niederspannungs-Stromnetzes insgesamt vier Sammelschienen, von denen die drei Sammelschienen L1, L2, L3 den jeweiligen Phasen, und die mit "PEN" bezeichnete Sammelschiene dem kombinierten Schutzleiter/Nullleiter des Niederspannungs-Stromnetzes zugeordnet sind.

Wie der Fig. 1 weiterhin entnommen werden kann, sind die Sammelschienen L1, L2, L3 mit Sicherungshalterungen 4a bis 4f bestückt, in die Starkstromsicherungen 6 einsetzbar sind, sind, welche die jeweilige Sammelschiene mit der zugehörigen Stromversorgungsleitung 8a-f elektrisch leitend verbindet. Die Stromversorgungsleitungen 8 a-f versorgen hierbei beispielsweise die Haushalte eines Straßenzuges mit Strom, und münden mit ihrem anderen Ende in einen nicht dargestellten weiteren Schaltkasten eines anderen Knotens des Niederspannungs-Stromnetzes.

Gemäß Fig. 1 sind die Stromversorgungsleitungen 8d, 8e und 8f durch Entfernen der zugehörigen Sicherungen 6 aus den zugeordneten Sicherungshalterungen 4d, 4e und 4f im Wege der Netztrennung von der stromführenden Sammelschiene L1 elektrisch getrennt und werden über den nicht dargestellten Schaltkasten des weiteren Knotenpunkts des Niederspannungs-Stromnetzes vom anderen Ende aus mit Strom versorgt.

Die Stromversorgungsleitung 8f ist mit einer ersten Powerline-Datenübertragungseinrichtung 10 gekoppelt, was z.B. im Wege der im Stand der Technik bekannten "Piercing'"-Technologie dadurch erfolgen kann, dass die Isolation der zugehörigen Adern für den PEN sowie die der Sammelschiene L1 zugeordneten Phase durch nadelförmige Elemente durchstochen werden, die die spannungsführenden Adern kontaktieren, um die Hochfrequenzsignale zu übertragen.

Die Sammelschiene L1 ist ferner mit einer weiteren Powerline-Datenübertragungseinrichtung 12 verbunden, welche die Stromversorgungsleitungen 8a, 8b, 8c und die daran angeschlossenen Haushalte mit dem Datennetz 14 verbindet, welches beispielsweise ein Glasfasernetz ist, das mit einem nicht dargestellten Netzwerk-Rechner zur Übertragung der Daten in Form von Datenpaketen gekoppelt ist.

Die weitere Powerline-Datenübertragungseinrichtung 12 wandelt die ihr über das Datennetz 14 zugeführten Datenpakete in Hochfrequenzsignale um, die in Folge der elektrisch leitenden Verbindung zwischen der Sammelschiene L1 und den Starkstromsicherungen 6 den Stromversorgungsleitungen 8a, 8b und 8c und über diese den jeweiligen Verbrauchern direkt zugeführt werden.

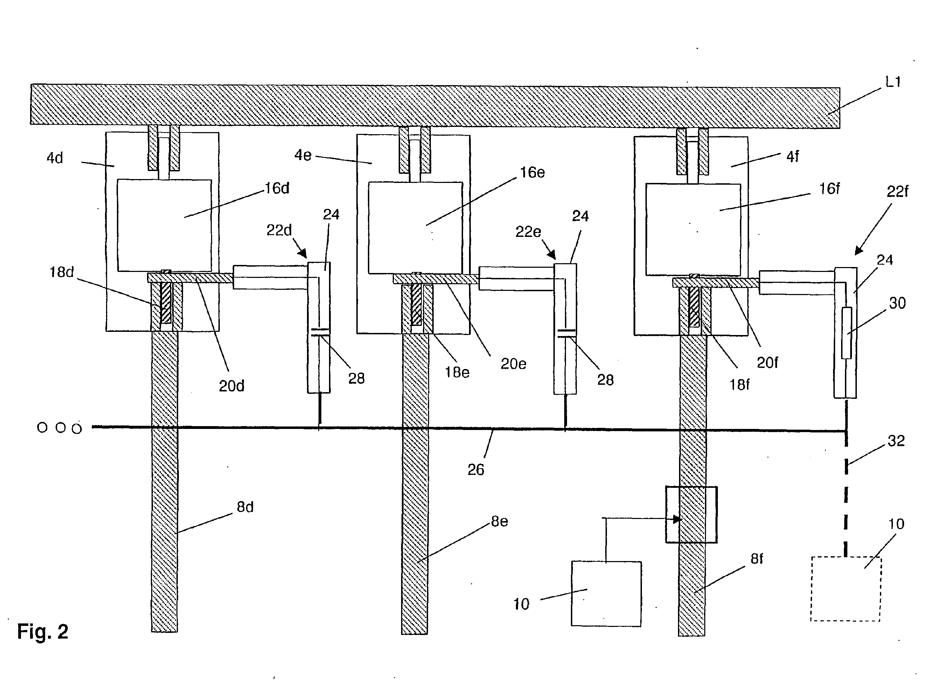

Wie der Fig. 2 im Detail entnommen werden kann, sind in die Sicherungshalterungen 4f und 4e ein erstes und ein zweites Isolatorelement 16f und 16e eingesetzt, die jeweils einen Körper aus Isolatormaterial, z.B. aus Keramik aufweisen, an welchem ein zugehöriger erster und zweiter Kontaktbereich 18f und 18e gebildet ist, der bei eingesetztem Isolatorelement 16 mit der zugehörigen ersten oder zweiten Stromversorgungsleitung 8f, 8e in elektrisch leitender Verbindung steht.

Gemäß der Darstellung von Fig. 2 können zum Anschluss zusätzlicher, durch Netztrennung getrennter Stromversorgungsleitungen weitere erfindungsgemäße Isolatorelemente 16 in die zugehörigen Sicherungshalterungen 4 eingesetzt sein, wie dies anhand der Sicherungshalterung 4d und des Isolatorelements 16d beispielhaft angedeutet ist.

Auf den ersten leitenden Kontaktbereich 18f des ersten Isolatorelements 16f ist eine erste gabelförmig ausgebildete klingenartige Kontaktfläche 20f eines ersten Steckers 22f nach Art eines Huckepacksteckers aufgesteckt, der vorzugsweise ein rechtwinklig geformtes Gehäuse 24 aus Isolatormaterial aufweist.

In gleicher Weise ist auf den zweiten leitenden Kontaktbereich 18e des zweiten Isolatorelements 16e die gabelförmig ausgebildete klingenartige zweite Kontaktfläche 20e eines zweiten Steckers 22e ebenfalls nach Art eines Huckepacksteckers aufgesteckt, der vorzugsweise ebenfalls ein rechtwinklig geformtes Gehäuse 24 aus Isolatormaterial aufweist.

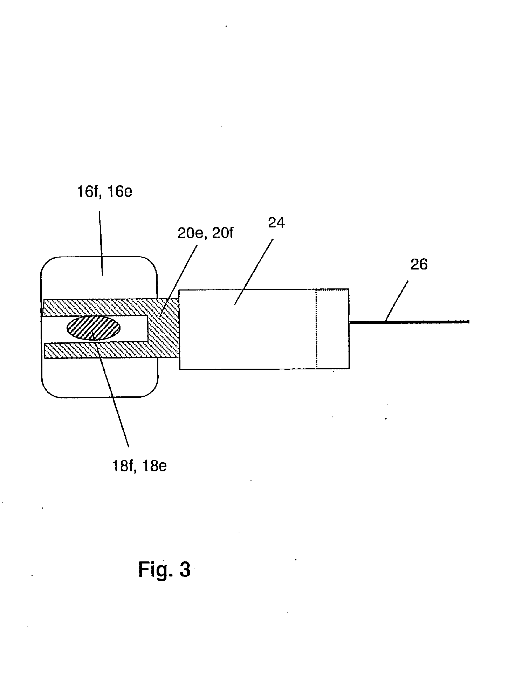

Die klingen- oder messerartige Ausgestaltung der gabelförmig ausgebildeten Kontaktflächen 20f und 20e des ersten und zweiten Steckers 22f und 22e und deren Zusammenwirken mit dem zugehörigen Isolatorelement 16f, 16e ist in Fig. 3 verdeutlicht.
Die Kontaktflächen 20f und 20e des ersten und zweiten Steckers 22f und 22e sind zur Übertragung von Hochfrequenzsignalen über eine elektrische Verbindungsleitung 26 und einen Koppelkondensator 28 miteinander verbunden. Der Koppelkondensator 28 ist vorzugsweise ein Y1- oder Y2 Kondensator, der im Falle einer Zerstörung durch Überspannung oder dergleichen, einen Isolator für den elektrischen Strom bildet, so dass zwischen den durch Netztrennung elektrisch voneinander isolierten Stromversorgungsleitungen 8f und 8e kein unzulässiger Strom fließt.

Wie der Darstellung von Fig. 2 weiterhin entnommen werden kann, ist in den ersten Stecker 22f eine zusätzliche Sicherung 30 eingebaut, die in gleicher Weise wie der Koppelkondensator 28 vorzugsweise in das isolierte Gehäuse des zugehörigen Steckers 22 integriert ist. Durch den Einsatz einer Sicherung 30 anstelle eines Koppelkondensators, der in diesem Falle ebenfalls zum Einsatz gelangen könnte, kann der Verlust bei der Übertragung der Hochfrequenzsignale von der ersten Powerline-Datenüberteiseinrichtung 10 in vorteilhafter Weise reduziert werden. Die Sicherung 30 kann z.B. eine 1-Ampere-Sicherung sein.

Gemäß der Darstellung von Fig. 2 können an die Verbindungsleitung 26 ferner ein oder auch mehrere weitere Stecker 22d angeschlossen sein, falls weitere, durch Netztrennung abgekoppelte Stromversorgungsleitungen 8 innerhalb des Netzknotens mit der ersten Powerline-Datenübertragungseinrichtung 10 verbunden, und über diese versorgt werden sollen.

Gemäß einer weiteren Ausführungsform der Erfindung, kann die erste Powerline-Datenübertragungseinrichtung 10 alternativ über eine in gestrichelten Linien in Fig. 2 angedeutete weitere Verbindungsleitung 32 elektrisch leitend mit der Verbindungsleitung 26 verbunden sein, wobei der Anschluss der Powerline-Datenübertragungseinrichtung 10 vorzugsweise über einen nicht dargestellten Steckkontakt erfolgt. Hierdurch lässt sich eine unabhängige Einheit aus Steckern 22 d-f schaffen, die über eine gemeinsame Verbindungsleitung 26 miteinander verbunden sind, und sich auf einfache Weise an eine Powerline-Datenübertragungseinrichtung 10 anschließen lassen.

## Patentansprüche

1. Anordnung zum Anschluss einer Powerline-Datenübertragungseinrichtung (10) an eine erste und eine zweite Stromversorgungsleitung (8f, 8e) in einem Netzknoten eines Niederspannungs-Stromnetzes, wobei die erste und die zweite Stromversorgungsleitung (8f, 8e) durch Entfernen einer zugeordneten ersten und zweiten Starkstromsicherung (6) aus einer zugeordneten ersten und zweiten Sicherungshalterung (4f, 4e) im Wege der Netztrennung elektrisch von einer stromführenden Phase (L1) des Niederspannungs-Stromnetzes getrennt sind, und die Powerline-Datenübertragungseinrichtung (10) elektrisch leitend mit der ersten Stromversorgungsleitung (8f) verbunden ist,
**gekennzeichnet durch**
einen ersten Stecker (22f), der eine erste gegabelte klingenartige Kontaktfläche (20f) aufweist, die auf einen zugeordneten ersten Kontaktbereich (18f) eines in die erste Sicherungshalterung (4f) einsetzbaren Isolatorelements (16f) aufsteckbar ist, welcher im eingesetzten Zustand mit der ersten Stromversorgungsleitung (8f) in Verbindung steht, sowie einen zweiten Stecker (22e), der eine zweite Kontaktfläche (20e) aufweist, die auf einen zweiten Kontaktbereich (18e) eines in die zweite Sicherungshalterung (4e) einsetzbaren zweiten Isolatorelements (16e) aufsteckbar ist, welcher im eingesetzten Zustand mit der zweiten Stromversorgungsleitung (8e) in elektrisch leitender Verbindung steht, wobei die Kontaktflächen (20f, 20e) des ersten und zweiten Steckers (22f, 22e) zur Übertragung von Hochfrequenzsignalen über eine elektrische Verbindungsleitung (26) und einen Koppelkondensator (28) miteinander verbunden sind.

2. Anordnung nach Anspruch 1,
**dadurch gekennzeichnet,dass**
das die erste und zweite Kontaktfläche (18f, 18e) des ersten und zweiten Isolatorelements (16f, 16e) im Wesentlichen dieselbe Form wie die Kontaktfläche einer in die erst und zweite Sicherungshalterung (4f, 4e) einsetzbaren Starkstromsicherung (6) besitzen.

3. Anordnung nach Anspruch 1 oder 2,
**dadurch gekennzeichnet,dass**
der erste Stecker (22f) und/oder zweite Stecker (22e) ein isoliertes Gehäuse (24) aufweisen.

4. Anordnung nach Anspruch 2 und 3,
**dadurch gekennzeichnet,dass**
der erste und/oder zweite Stecker (22f, 22e) ein im Wesentlichen im rechten Winkel angeordnetes Gehäuse (24) besitzen, so dass sie nach Art eines Huckepacksteckers auf das zugeordnete Isolatorelement (16) aufsteckbar sind.

5. Anordnung nach einem der Ansprüche 3 oder 4,
**dadurch gekennzeichnet,dass**
der Koppelkondensator (28) in das Gehäuse (24) des zweiten Steckers (22f) integriert ist.

6. Anordnung nach einem der vorhergehenden Ansprüche,
**dadurch gekennzeichnet,dass**
der Koppelkondensator (28) ein Kondensator mit der Spezifikation Y1 oder Y2 ist, welcher im Falle einer Zerstörung einen elektrischen Isolator bildet.

7. Anordnung nach einem der vorhergehenden Ansprüche,
**dadurch gekennzeichnet,dass**
die erste Kontaktfläche (20f) zusätzlich über eine Schwachstromsicherung (30) mit
der Verbindungsleitung (26) und dem Koppelkondensator (28) verbunden ist.

8. Anordnung nach Anspruch 3 und 7,
**dadurch gekennzeichnet,dass**
die Sicherung (30) in das Gehäuse (24) des ersten Steckers (22f) integriert ist.

9. Anordnung nach einem der vorhergehenden Ansprüche,
**dadurch gekennzeichnet,dass**
die Powerline-Datenübertragungseinrichtung (10) über ein die Isolation der ersten Stromversorgungsleitung (8f) durchdringendes nadelförmiges Kontaktelement elektrisch leitend mit der ersten Stromversorgungsleitung (8f) verbunden ist.

10. Anordnung nach einem der Ansprüche 1 bis 8,
**dadurch gekennzeichnet,dass**
die Powerline-Datenübertragungseinrichtung (10) über eine weitere Verbindungsleitung (23) elektrisch leitend mit der ersten Kontaktfläche (20f) des ersten Steckers (22f) verbunden ist.

11. Anordnung nach einem der vorhergehenden Ansprüche,
**dadurch gekennzeichnet,dass**
ein oder mehrere weitere Stecker (22d) über zugeordnete weitere Koppelkondensatoren (28) elektrisch leitend mit der ersten Kontaktfläche (20f) des ersten Steckers (22f) verbunden sind, um eine oder weitere, durch Netztrennung von der Phase (L1) getrennte Stromversorgungsleitungen (8c) mit der Powerline-Datenübertragungseinrichtung (10) zu verbinden.

12. Verfahren zum Anschluss einer Powerline-Datenübertragungseinrichtung (10) an eine erste und eine zweite Stromversorgungsleitung (8f, 8e) in einem Netzknoten eines Niederspannungs-Stromnetzes, wobei die erste und die zweite Stromversorgungsleitung (8f, 8e) im Wege der Netztrennung elektrisch von einer stromführenden Phase (L1) des Niederspannungs-Stromnetzes getrennt sind, und die stromführende Phase (L1) mit einer weiteren Powerline-Datenübertragungseinrichtung (12) elektrisch leitend verbunden ist,
**dadurch gekennzeichnet,dass**
die erste Stromversorgungsleitung (8f) und die zweite Stromversorgungsleitung (8e) über einen Koppelkondensator (28) sowie eine elektrische Verbindungsleitung (26) miteinander verbunden sind, und die Powerline-Datenübertragungseinrichtung (10) elektrisch leitend an die elektrische Verbindungsleitung (26) angeschlossen ist.

13. Verfahren nach dem vorhergehenden Anspruch 12,
**dadurch gekennzeichnet, dass**
die elektrische Verbindungsleitung (26) über eine Schwachstromsicherung (30) mit der ersten Stromversorgungsleitung (8f) verbunden ist, und der Koppelkondensator (28) die zweite Stromzufuhrleitung (8e) mit der elektrischen Verbindungsleitung (26) zur Übertragung von Hochfrequenzsignalen verbindet.

14. Verfahren nach einem der Ansprüche 12 oder 13,
**dadurch gekennzeichnet,dass**
die Powerline-Datenübertragungseinrichtung (10) über einen ersten Stecker (22f) mit der ersten Stromversorgungsleitung (8f) verbindbar ist.

15. Verfahren nach Anspruch 14,
**dadurch gekennzeichnet,dass**
die Powerline-Datenübertragungseinrichtung (10) über einen zweiten Stecker (22e) mit der zweiten Stromversorgungsleitung (8e) verbindbar ist.

16. Verfahren nach einem der Ansprüche 12 bis 15,
**dadurch gekennzeichnet,dass**
die Powerline-Datenübertragungseinrichtung (10) über ein die Isolation der ersten Stromversorgungsleitung (8f) durchdringendes nadelförmiges Kontaktelement elektrisch leitend mit der ersten Stromversorgungsleitung (8f) verbunden ist.

17. Verfahren nach Anspruch 16,
**dadurch gekennzeichnet,dass**
die elektrische Verbindungsleitung (26) unter Zwischenschaltung des Koppelkondensators (28) über ein die Isolation der zweiten Stromversorgungsleitung (8e) durchdringendes nadelförmiges Kontaktelement zur Übertragung von Hochfrequenzsignalen mit der zweiten Stromversorgungsleitung (8e) verbunden ist.

## Claims

1. Assembly for connecting a power line data transmission device (10) to a first and a second power supply line (8f, 8e) in a network node of a low-voltage power network, the first and the second power supply lines (8f, 8e) being electrically isolated from a current conducting phase (L1) of the low voltage network by the removal of an associated first and second power current fuse (6) from an associated first and second fuse holder (4f, 4e), according to the practice of supply isolation, and the power line data transmission device (10) being connected in an electrically conductive manner to the first power supply line (8f), **characterised by** a first plug (22f) which has a first forked blade-type contact surface (20f) which can be plugged onto a first associated contact region (18f) of an isolator element (16f) which can be inserted into the first fuse holder (4f), which first plug, once inserted, is connected to the first power supply line (8f), and also a second plug (22e) which has a second contact surface (20e) which can be plugged onto a second contact region (18e) of a second isolator element (16e) which can be inserted into the second fuse holder (4e), which second plug, once inserted, is connected in an electrically conductive manner to the second power supply line (8e), the contact surfaces (20f, 20e) of the first and second plugs (22f, 22e) being interconnected in order to transmit high-frequency signals via an electric connecting cable (26) and a coupling capacitor (28).

2. Assembly according to claim 1, **characterised in that** the first and second contact surfaces (18f, 18e) of the first and second isolator elements (16f, 16e) are substantially the same shape as the contact surface of a power current fuse (6) which may be inserted into the first and second fuse holders (4f, 4e).

3. Assembly according to either claim 1 or claim 2, **characterised in that** the first plug (22f) and/or the second plug (22e) has/have an insulated housing (24).

4. Assembly according to claims 2 and 3, **characterised in that** the first and/or second plug (22f, 22e) has/have a housing (24) positioned substantially at a right angle, so that they may be attached onto the associated isolator element (16) in the manner of a piggyback plug.

5. Assembly according to either claim 3 or claim 4, **characterised in that** the coupling capacitor (28) is integrated into the housing (24) of the second plug (22f).

6. Assembly according to any one of the preceding claims, **characterised in that** the coupling capacitor (28) is a capacitor with Y1 or Y2 specification which, in the event of a disruption, forms an electrical isolator.

7. Assembly according to any one of the preceding claims, **characterised in that** the first contact surface (20f) is also connected to the connecting cable (26) and the coupling capacitor (28) via a light current fuse (30).

8. Assembly according to claims 3 and 7, **characterised in that** the fuse (30) is integrated into the housing (24) of the first plug (22f).

9. Assembly according to any one of the preceding claims, **characterised in that** the power line data transmission device (10) is connected in an electrically conductive manner to the first power supply line (8f) via a needle-shaped contact element penetrating the insulation of the first power supply line (8f).

10. Assembly according to any one of claims 1 to 8, **characterised in that** the power line data transmission device (10) is connected in an electrically conductive manner to the first contact surface (20f) of the first plug (22f) via another connecting cable (23).

11. Assembly according to any one of the preceding claims, **characterised in that** one or more other plugs (22d) are connected in an electrically conductive manner to the first contact surface (20f) of the first plug (22f) via other associated coupling capacitors (28) to connect one or more power supply lines (8c), isolated by supply isolation from the phase (L1), to the power line data transmission device (10).

12. Method for connecting a power line data transmission device (10) to a first and a second power supply line (8f, 8e) in a network node of a low-voltage power network, the first and the second power supply lines (8f, 8e) being electrically isolated from a current-conducting phase (L1) of the low-voltage network according to the practice of supply isolation, and the current-conducting phase (L1) being connected in an electrically conductive manner to another power line data transmission device (12), **characterised in that** the first power supply line (8f) and the second power supply line (8e) are interconnected via a coupling capacitor (28) and an electric connecting cable (26), and the power line data transmission device (10) is connected in an electrically conductive manner to the electric connecting cable (26).

13. Method according to the preceding claim 12, **characterised in that** the electric connecting cable (26) is connected to the first power supply line (8f) via a light current fuse (30), and the coupling capacitor (28) connects the second power supply line (8e) to the electric connecting cable (26) to transmit high-frequency signals.

14. Method according to either claim 12 or claim 13, **characterised in that** the power line data transmission device (10) may be connected to the first power supply line (8f) via a first plug (22f).

15. Method according to claim 14, **characterised in that** the power line data transmission device (10) may be connected to the second power supply line (8e) via a second plug (22e).

16. Method according to any one of claims 12 to 15, **characterised in that** the power line data transmission device (10) is connected in an electrically conductive manner to the first power supply line (8f) via a needle-shaped contact element penetrating the insulation of the first power supply line (8f).

17. Method according to claim 16, **characterised in that** the electric connecting cable (26) is connected to the second power supply line (8e) via a needle-shaped contact element, penetrating the insulation of the second power supply line (8e), to transfer high-frequency signals, with the interconnection of the coupling capacitor (28).

## Revendications

1. Dispositif pour raccorder un dispositif de transmission de données à ligne de puissance (10) à une première et à une seconde lignes d'alimentation électrique (8f, 8e) dans un noeud de réseau d'un réseau électrique basse tension, la première et la seconde lignes d'alimentation électrique (8f, 8e) étant séparées électriquement d'une phase (L1) conductrice du réseau électrique basse tension par l'enlèvement d'un premier et d'un second fusibles pour courant fort (6) attribués d'un premier et d'un second supports de fusible (4f, 4e) attribués par le biais de la séparation de réseau, et le dispositif de transmission de données à ligne de puissance (10) étant relié de façon électroconductrice à la première ligne d'alimentation électrique (8f),
**caractérisé par** une première fiche (22f), qui présente une première surface de contact (20f) de type lame et fourchue, qui peut être emboîtée sur une première zone de contact (18f) attribuée d'un élément isolateur (16f) pouvant être inséré dans le premier support de fusible (4f), laquelle est en liaison avec la première ligne d'alimentation électrique (8f) dans l'état inséré, et une seconde fiche (22e), qui présente une seconde surface de contact (20e) qui peut être emboîtée sur une seconde zone de contact (18e) d'un second élément isolateur (16e) pouvant être inséré dans le second support de fusible (4e), laquelle est en liaison électroconductrice avec la seconde ligne d'alimentation électrique (8e) dans l'état inséré, les surfaces de contact (20f, 20e) de la première et de la seconde fiches (22f, 22e) étant reliées entre elles pour la transmission de signaux de haute fréquence au moyen d'une ligne de liaison (26) électrique et d'un condensateur de liaison(28).

2. Dispositif selon la revendication 1,
**caractérisé en ce que**
la première surface et la deuxième surfaces de contact (18f, 18e) du premier et du second éléments isolateurs (16f, 16e) ont sensiblement la même forme que la surface de contact d'un fusible pour courant fort (6) pouvant être insérée dans le premier et le second supports de fusible (4f, 4e).

3. Dispositif selon la revendication 1 ou 2,
**caractérisé en ce que**
la première fiche (22f) et/ou la seconde fiche (22e) présentent un boîtier (24) isolé.

4. Dispositif selon les revendications 2 et 3,
**caractérisé en ce que**
la première et/ou la seconde fiche (22f, 22e) présentent un boîtier (24) disposé sensiblement à angle droit, de sorte qu'elles peuvent être emboîtées à la façon d'une fiche gigogne sur l'élément isolateur (16) attribué.

5. Dispositif selon l'une quelconque des revendications 3 ou 4,
**caractérisé en ce que**
le condensateur de liaison (28) est intégré dans le boîtier (24) de la seconde fiche (22f).

6. Dispositif selon l'une quelconque des revendications précédentes,
**caractérisé en ce que**
le condensateur de liaison (28) est un condensateur avec la spécification Y1ou Y2, qui forme un isolateur électrique dans le cas d'une destruction.

7. Dispositif selon l'une quelconque des revendications précédentes,
**caractérisé en ce que**
la première surface de contact (20f) est reliée en supplément au moyen d'un fusible pour courant faible (30) à la ligne de liaison (26) et au condensateur de liaison (28).

8. Dispositif selon les revendications 3 et 7,
**caractérisé en ce que**
le fusible (30) est intégré dans le boîtier (24) de la première fiche (22f).

9. Dispositif selon l'une quelconque des revendications précédentes,
**caractérisé en ce que**
le dispositif de transmission de données à ligne de puissance (10) est relié de façon électroconductrice à la première ligne d'alimentation électrique (8f) au moyen d'un élément de contact en forme d'aiguille, traversant l'isolation de la première ligne d'alimentation électrique (8f).

10. Dispositif selon l'une quelconque des revendications 1 à 8,
**caractérisé en ce que**
le dispositif de transmission de données à ligne de puissance (10) est relié au moyen d'une autre ligne de liaison (23) de façon électroconductrice à la première surface de contact (20f) de la première fiche (22f).

11. Dispositif selon l'une quelconque des revendications précédentes,
**caractérisé en ce que**
une ou plusieurs autres fiches (22d) sont reliées au moyen d'autres condensateurs de liaison (28) attribués de façon électroconductrice à la première surface de contact (20f) de la première fiche (22f), afin de relier une ou d'autres lignes d'alimentation électrique (8c) séparées de la phase (L1) par séparation de réseau au dispositif de transmission de données à ligne de puissance (10).

12. Procédé pour raccorder un dispositif de transmission de données à ligne de puissance (10) à une première et une seconde lignes d'alimentation électriques (8f, 8e) dans un noeud de réseau d'un réseau électrique à basse tension, la première et la seconde lignes d'alimentation électrique (8f, 8e) étant séparées, par le biais de la séparation de réseau, électriquement d'une phase (L1) conductrice du réseau électrique basse tension, et la phase (L1) conductrice de courant étant reliée de façon électroconductrice à un autre dispositif de transmission de données à ligne de puissance (12),
**caractérisé en ce que**
le premier dispositif d'alimentation électrique (8f) et la seconde ligne d'alimentation électrique (8e) sont reliées entre elles au moyen d'un condensateur de liaison (28) et d'une ligne de liaison (26) électrique, et le dispositif de transmission de données à ligne de puissance (10) est raccordé de façon électroconductrice à la ligne de liaison (26) électrique.

13. Procédé selon la revendication 12 précédente,
**caractérisé en ce que**
la ligne de liaison (26) électrique est reliée par un fusible pour courant faible (30) à la première ligne d'alimentation électrique (8f), et le condensateur de liaison (28) est relié à la seconde ligne d'arrivée électrique (8e) à la ligne d'alimentation (26) électrique pour la transmission de signaux de haute fréquence.

14. Procédé selon l'une quelconque des revendications 12 ou 13,
**caractérisé en ce que**
le dispositif de transmission de données à ligne de puissance (10) peut être relié par une première fiche (22f) à la première ligne d'alimentation électrique (8f).

15. Procédé selon la revendication 14,
**caractérisé en ce que**
le dispositif de transmission de données à ligne de puissance (10) peut être relié au moyen d'une seconde fiche (22e) à la seconde ligne d'alimentation électrique (8e).

16. Procédé selon l'une quelconque des revendications 12 à 15,
**caractérisé en ce que**
le dispositif de transmission de données à ligne de puissance (10) est relié de façon électroconductrice à la première ligne d'alimentation électrique (8f) au moyen d'un élément de contact en forme d'aiguille, traversant l'isolation de la première ligne d'alimentation électrique (8f).

17. Procédé selon la revendication 16,
**caractérisé en ce que**
la ligne d'alimentation (26) électrique est reliée à la seconde ligne d'alimentation électrique (8e) avec l'intercalation du condensateur de liaison (28) au moyen d'un élément de contact en forme d'aiguille, traversant l'isolation de la seconde ligne d'alimentation électrique (8e) pour la transmission de signaux de haute fréquence.
